**Europäisches Patentamt**

**European Patent Office**

**Office européen des brevets**

(11) Veröffentlichungsnummer: **0 362 420**

**A1**

# (12) EUROPÄISCHE PATENTANMELDUNG

(21) Anmeldenummer: **88116404.0**

(22) Anmeldetag: **04.10.88**

(51) Int. Cl.5: **B65G 53/52**

(43) Veröffentlichungstag der Anmeldung:
**11.04.90 Patentblatt 90/15**

(84) Benannte Vertragsstaaten:
**AT BE CH DE ES FR GB GR IT LI LU NL SE**

(71) Anmelder: **GERICKE AG, Maschinenfabrik**
**Althardstrasse 120**
**CH-8105 Regensdorf(CH)**

(72) Erfinder: **Molerus, Otto, Prof. Dr.-Ing.**
**Lärchenstrasse 7**
**D-8551 Hemhofen(DE)**
Erfinder: **Wirth, Karl-Ernst, Dr. Ing.**
**Kainsbacherstrasse 20**
**D-8561 Happurg(DE)**
Erfinder: **Siebenhaar, Wolfgang, Dr. Ing.**
**Wehrenreutherweg 46**
**D-8500 Nürnberg 90(DE)**
Erfinder: **Gericke, Willi**
**Laubisserstrasse 77**
**CH-8105 Watt(CH)**

(74) Vertreter: **Zeitler, Giselher, Dipl.-Ing.**
**Herrnstrasse 15**
**D-8000 München 22(DE)**

(54) **Verfahren und Vorrichtung zum pneumatischen Langsamfördern körniger Feststoffe durch Rohrleitungen.**

(57) Bei einem Verfahren zum pneumatischen Fördern von Fördergut 3 in Form von körnigen Feststoffen oder dgl. durch Rohrleitungen 1, bei dem das Fördergut 3 von einer in Form eines Senders, einer Schleuse oder dgl. ausgebildeten Fördergutaufgabeeinrichtung 11 aus unter Druck sowie unter Zugabe von Fördergas 4 in die Rohrleitung 1 eingegeben wird, wird derart vorgegangen, daß das Fördergut 3 in die in verschiedene schwingungsfähig gelagerte Förderleitungsabschnitte 2 unterteilte Rohrleitung so eingegeben wird, daß der Rohrquerschnitt nicht vollständig, sondern lediglich teilweise ausgefüllt ist. Weiterhin werden auf die einzelnen Förderleitungsabschnitte 2 von bis zu mehreren Metern Länge Schwingungen derart aufgebracht, daß die Wandreibung zwischen Fördergut 3 und Förderrohr 1 reduziert wird, und zwar derart, daß ein Förderzustand ähnlich einer Strähnen/Ballen-Förderung bis zu einer Pfropfenförderung mit hoher Gutbeladung des Fördergases 4 entsteht und sich die am Rohrboden 6 aufbauende Fördergutschicht 7 ebenfalls fortbewegt.

Fig. 2

## Verfahren und Vorrichtung zum pneumatischen Langsamfördern körniger Feststoffe durch Rohrleitungen

Die Erfindung betrifft ein Verfahren zum pneumatischen Fördern von Fördergut in Form von körnigen Feststoffen oder dgl. durch Rohrleitungen gemäß dem Oberbegriff des Anspruchs 1.

Bei einem derartigen Verfahren wird grundsätzlich das Fördergut von einer in Form eines Senders, einer Schleuse oder dgl. ausgebildeten Fördergutaufgabeeinrichtung unter Druck sowie unter Zugabe von Fördergas, insbesondere Förderluft, in die Rohrleitung eingegeben.

Beim heutigen Stand der pneumatischen Schüttgutförderung verstärkt sich der Trend zur Förderung mit sehr geringen Geschwindigkeiten des Fördergutes und hoher Gutbeladung des Fördergases. Eine derartige Schüttgutförderung bringt den Vorteil, daß das Fördergut und die Fördereinrichtung vor Abrieb sowie Zerstörung geschützt werden und daß die Verwendung kleinerer Fördergasmengen möglich ist. Dies erleichtert die Entstaubung und begünstigt die Einsparung von Energie.

Der im o.g. Sinn erwünschten Weiterentwicklung von Langsamförderverfahren mit hoher Gutbeladung des Fördergases sind jedoch durch den starken Anstieg des Druckwiderstandes Grenzen gesetzt. Dieser Anstieg des Druckwiderstandes wird durch die Reibung der Fördergas/Fördergutsäule an den Rohr wänden verursacht. Es ist deshalb schon mittels verschiedener Verfahren versucht worden, durch Zufuhr von Zusatzluft oder Bypass-Luft die durch den erwähnten hohen Druckwiderstand erzeugten Verstopfungen in der Rohrleitung zu beseitigen. Derartige Verfahren sind jedoch deshalb unbefriedigend, weil sie mit einem zusätzlichen Konstruktions- und Arbeitsaufwand verbunden sind.

Es ist weiterhin ein Verfahren der gattungsgemäßen Art bekannt (DE-PS 32 12 782), bei dem ein Förderrohr vollständig mit körnigem Fördergut ausgefüllt und in Schwingungen versetzt sowie gleichzeitig unter Druck gesetzt wird. Die Schwingungen werden in axialer Richtung oder in Umfangsrichtung zum Rohr aufgebracht und führen zur Verminderung der Reibung zwischen dem Fördergut sowie der Rohrwand. Dies bewirkt eine sehr langsame Förderung der kompakten Fördergutsäule, was grundsätzlich erwünscht ist. Nachteilig bei diesem bekannten Verfahren ist jedoch, daß es in der Förderleistung sehr beschränkt ist, da nur Fördergeschwindigkeiten bis etwa 20 cm/s erreichbar sind. Es ist demnach für größere Förderleistungen nur eine zu geringe Fördergeschwindigkeit erzielbar. Nachteilig ist außerdem auch der erforderliche konstruktive Aufwand, wenn das Förderrohr in eine andere Richtung umzulenken ist.

Der Erfindung liegt daher die Aufgabe zugrunde, das pneumatische Förderverfahren der gattungsgemäßen Art derart auszugestalten, daß bei weiter vermindertem Reibungswiderstand die Gutbeladung des Fördergases ganz erheblich gesteigert wird, ohne daß höhere Förderdrücke aufgewendet werden müssen. Die zur Durchführung dieses Verfahrens vorgesehene Vorrichtung soll einfach, dabei jedoch funktionszuverlässig ausgestaltet sein.

Das zur Lösung dieser Aufgabe geschaffene Förderverfahren gemäß der Erfindung ist durch die Merkmale des Anspruchs 1 gekennzeichnet. Vorteilhafte Ausgestaltungen hiervon sind in den Ansprüchen 2 bis 6 beschrieben.

Die zur Durchführung dieses Verfahrens geschaffene Vorrichtung gemäß der Erfindung weist die im Anspruch 7 beschriebenen Merkmale auf. Vorteilhafte Ausgestaltungen hiervon sind in den weiteren Ansprüchen beschrieben.

Bei dem erfindungsgemäß ausgestalteten Verfahren wird grundsätzlich derart vorgegangen, daß das Fördergut so in die Rohrleitung eingegeben wird, daß der Rohrquerschnitt nicht vollständig, sondern lediglich teilweise ausgefüllt ist und daß auf einzelne Förderleitungsabschnitte von bis zu mehreren Metern Länge Schwingungen derart aufgebracht werden, daß die Wandreibung zwischen Fördergut und Förderrohr so reduziert wird, daß ein Förderzustand ähnlich einer Strähnen/Ballenförderung bis zu einer Pfropfenförderung mit hoher Gutbeladung des Fördergases entsteht und sich die am Rohrboden aufbauende Fördergutschicht ebenfalls fortbewegt.

Durch das erfindungsgemäße Verfahren wird demnach mit Vorteil die bisher noch vorhandene Lücke zwischen der bekannten sehr langsamen Förderung im vollständig mit Schüttgut gefüllten vibrierten Rohr und der sogenannten Strähnenförderung ausgefüllt, bei der ein Förderzustand herrscht, wo über einer ruhenden unteren Gutschicht das Fördergut in Strähnen und Ballen mit einer Beladungsgröße gefördert wird, die gerade noch einen zu hohen Druckwiderstand und damit ein Verstopfen des Rohrleitungsquerschnittes verhindert.

Bei einer praktischen Erprobung des erfindungsgemäßen Verfahrens konnte bestätigt werden, daß durch Unterteilung einer herkömmlichen pneumatischen Hochdruckschubförderanlage in verschiedene Förderleitungsabschnitte und durch Aufbringen von Schwingungen auf diese Rohrabschnitte dann bei wesentlich höheren Beladungen und geringeren Geschwindigkei ten gefahren werden kann. Dabei ist der Rohrquerschnitt nicht vollständig, sondern lediglich teilweise ausgefüllt, wobei die Befüllung jedoch stärker ist als bei der normalen pneumatischen Schubförderung.

Durch die Anwendung von Schwingungen, speziell an den kritischen Rohrleitungsstellen, wie beisp. in bzw. an Rohrbögen oder bei der Einspeisung vom Sender in die Rohrleitung, wird auch bei hoher Beladung eine Verstopfung vermieden, indem die Wandreibung durch die aufgebrachten Schwingungen vermindert wird.

Somit wird durch die Erfindung eine Förderung ermöglicht, bei der das Förderrohr nicht vollständig gefüllt und damit die Förderfähigkeit begrenzt ist, sondern bei welcher der Förderzustand einer Strähnen/Ballen-Förderung erzeugt wird, wobei jedoch die am Rohrboden sich aufbauende Fördergutschicht unter dem Einfluß der Schwingungen sich ebenfalls fortbewegt, so daß der Reibungswiderstand weiter entscheidend vermindert wird. Durch diese Art der Förderung kann die Beladung des Fördergases mit Fördergut ganz erheblich gesteigert werden, ohne daß höhere Förderdrücke aufgewendet werden müssen.

In praktischen Versuchen unter Anwendung der Erfindung konnte z. B. für Sand als Fördergut bei gleichem Druck die Beladung mehr als verdoppelt werden. Hierbei wurden außerdem Fördergeschwindigkeiten von etwa 50 cm/s erzielt, was bisher kaum für möglich gehalten wurde. Dies erlaubt gegenüber den heute angewendeten wesentlich höheren Fördergeschwindigkeiten eine starke Verminderung des Verschleißes und der Energiekosten. Trotz der geringen Fördergeschwindigkeit erlaubt die mit der Erfindung erzielbare hohe Beladung die Erreichung beachtlicher Förderleistungen pro Rohrquerschnittsfläche.

Die zur Durchführung des erfindungsgemäßen Verfahrens vorgesehene Vorrichtung ist zweckmäßigerweise derart ausgestaltet, daß die einzelnen Förderleitungsabschnitte zur Vibrationserzeugung jeweils einen Schwingungserreger aufweisen und durch Schwingungskompensatoren voneinander getrennt sind.

Da in der Förderleitung die größten Reibungswiderstände naturgemäß in den Rohrbögen auftreten, ist bei der erfindungsgemäßen Ausgestaltung der Vorrichtung vorgesehen, daß bei Verwendung von Rohrbögen mit verhältnismäßig kleinem Biegeradius entsprechende Schwingungen aufgebracht werden, die vorzugsweise Frequenzen im Bereich von etwa 50 Hz und/oder Beschleunigungen von wenigstens 1,2 g, vorzugsweise etwa 1,5 g, aufweisen. Hierdurch kann der Druckwiderstand erheblich herabgesetzt werden.

Gemäß der Erfindung ist vorgesehen, daß die Förderleitung, die beispielsweise aus horizontalen und vertikalen Teilstücken besteht, zweckmäßigerweise in Vibrationsabschnitte unterteilt ist. Diese bestehen ihrerseits jeweils aus einem Rohrbogen mit zwei damit fest verbundenen Schenkelstücken sowie aus geraden Rohrabschnitten. Die einzelnen Vibrationsabschnitte sind hierbei durch Schwingungskompensatoren voneinander getrennt. Bei solchen Rohrabschnitten, die einen Rohrbogen einschließen, erfolgt die Vibration im wesentlichen in Richtung des mittleren Radius oder durch eine Kreisbewegung mittels Unwuchtmotor. Demgegenüber wird bei geraden Rohrstücken die Vibration vorteilhafterweise in axialer Richtung oder auch kreisförmig bzw. mit schräg nach oben in Förderrichtung gerichteter Schwingung durchgeführt.

Es ist auch möglich, einzelne Rohrabschnitte mit geringerem Widerstand, wie z.B. senkrechte oder fallende Abschnitte oder das Rohrleitungsende, ohne Schwingung als feste Rohrabschnitte herkömmlicher Art auszubilden.

Durch das Verfahren sowie die Vorrichtung gemäß der Erfin dung ist es außerdem mit Vorteil möglich, in einfacher Weise die Fördermenge nach Wunsch zu variieren bzw. zu dosieren. Dies erfolgt entweder durch entsprechendes Ändern des Fördergasdruckes und/oder durch Variieren der Schwingungen am Anfang der Förderleitung, wobei hierzu zweckmäßigerweise der erste Rohrabschnitt mit einem einstellbaren oder regelbaren Vibrationserreger als Dosierorgan ausgestattet ist.

Durch entsprechende praktische Versuche mit dem Verfahren sowie der Vorrichtung gemäß der Erfindung konnte bestätigt werden, daß sich bei der ansonsten grundsätzlich schwierigen vertikal aufwärts gerichteten Förderung feinkörniger Partikel mit einer Partikelgröße unter 1 mm unter dem Einfluß der erfindungsgemäß vorgesehenen Schwingungen eine gleichmäßige Feststoffverteilung in der Rohrleitung und damit ein schonender Transport der Schüttgutsäule einstellt.

Um jedoch zu verhindern, daß bei Förderung grobkörniger Partikel mit Partikelgrößen über 1 mm in dem schwingenden Förderrohr möglicherweise Entmischungen in Form von Gaskolben bei der vertikal nach oben erfolgenden Förderung auftreten, ist es in solch einem Fall in weiterer Ausgestaltung der Erfindung vorteilhaft, die vertikalen Teile der Förderleitung schraubenartig um eine vertikale Achse sich windend anzuordnen. In diesem Fall wird dann zweckmäßigerweise die aufwärtsspiralig angeordnete Förderleitung um ihre vertikale Mittelachse in drehende Schwingungen versetzt. Dadurch wird auch bei der vertikal nach oben führenden Förderung ein ähnlicher Förderzustand wie bei der Horizontalförderung erzielt. Somit kann eine derartige Anordnung der Förderleitung bei der Förderung extrem bruchempfindlicher Güter von praktischer und damit wesentlicher Bedeutung sein.

Die Erfindung wird im folgenden anhand der Zeichnung näher erläutert. Diese zeigt in:

Fig. 1 a) - f) verschiedene Förderzustände bei der pneumatischen Förderung, und zwar jeweils schematisch im Längsschnitt (linkes Bild) sowie im Querschnitt (rechtes Bild), nämlich

1a) den Förderzustand des reinen Flugs,

1b) den Strähnen-Förderzustand,

1c) den Strähnen/Dünen-Förderzustand,

1d) den Dünen/Ballen-Förderzustand,

1e) den Förderzustand des reinen Schubs (Fließbettzustand) und

1f) den Zustand der indizierten Pfropfenförderung;

Fig. 2 schematisch die Fördervorrichtung mit einer in unterschiedlicher Weise ausgestalteten Förderleitung.

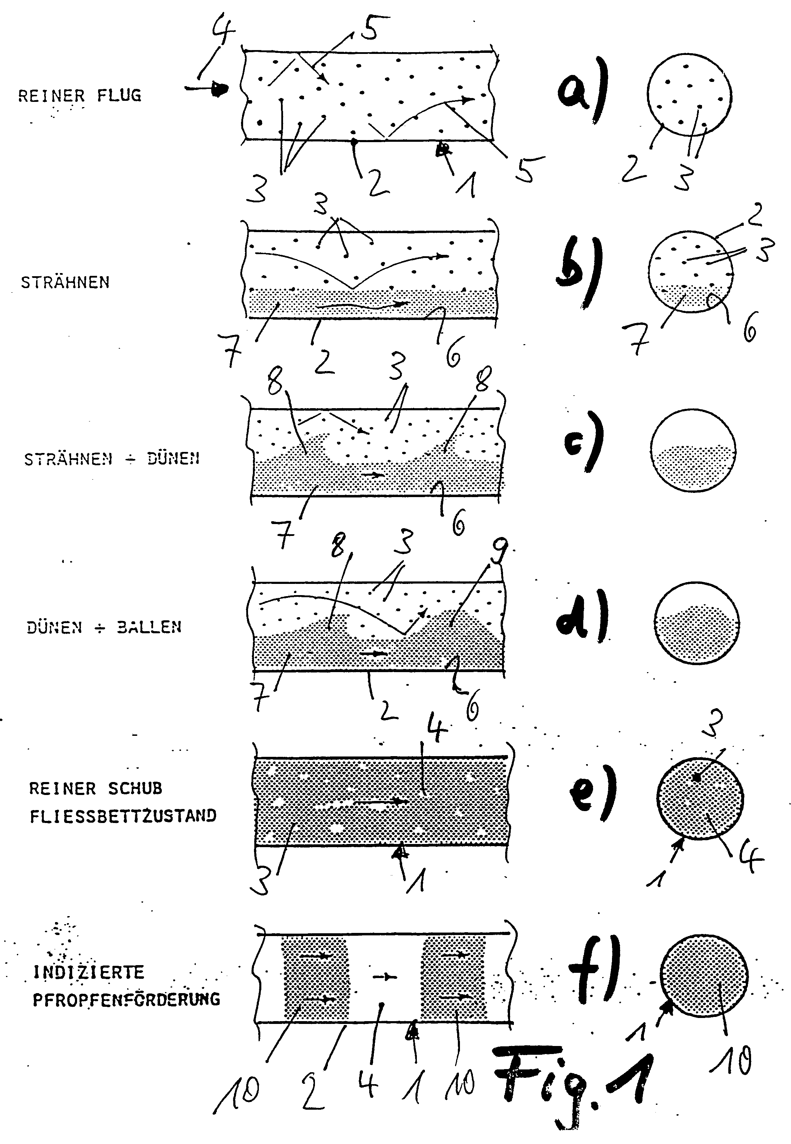

Wie aus den verschiedenen Darstellungen der Fig. 1 ersichtlich, können in der Förderleitung 1 bzw. dem einzelnen Förderleitungsabschnitt 2 einer pneumatischen Fördervorrichtung verschiedene Förderzustände herrschen, und zwar in Abhängigkeit von den aufgebrachten Bedingungen. So zeigt Fig. 1a) den im Rohrabschnitt 2 herrschenden Förderzustand des reinen Fluges, bei dem die einzelnen Fördergutteilchen 3 frei im Fördergasstrom 4 schwebend von diesem vorwärtstransportiert werden. Die sich hierbei ergebende Wandreibung, die durch den Aufprall der Gutteilchen 3 an der Innenwand des Rohrabschnittes 2 verursacht ist, ist durch die Pfeile 5 angedeutet.

Demgegenüber ist in Fig. 1b) der Strähnen-Förderzustand dargestellt. Dieser entspricht im wesentlichen dem zuvor beschriebenen Förderzustand des reinen Fluges gemäß Fig. 1a), jedoch mit dem Unterschied, daß sich am Rohrboden 6 des Förderleitungsabschnittes 2 eine Fördergutschicht 7 ab gelagert hat, die in Form von Strähnen ausgebildet ist und grundsätzlich eine ruhende Schicht darstellt. Bei der Anwendung des beschriebenen Verfahrens, bei dem die Rohrleitung 1 lediglich teilweise ausgefüllt ist und eine spezielle, die Wandreibung reduzierende Schwingung aufgebracht wird, bewegt sich jedoch diese am Rohrboden 6 befindliche Fördergutschicht 7 ebenfalls vorwärts, wie durch den Pfeil in Fig. 1b) angedeutet.

Ein gegenüber Fig. 1b) abgewandelter Förderzustand ist aus Fig. 1c) ersichtlich. Hierbei herrscht ein Strähnen/Dünen-Förderzustand vor, bei dem die auf dem Rohrboden 6 befindliche Fördergutschicht 7 an ihrer Oberfläche einen solchen Verlauf aufweist, daß in Richtung der Rohrachse aufeinanderfolgende Formationen in Form von Dünen 8 gebildet sind.

Diese Formationen können auch, wie aus Fig. 1d) ersichtlich, die Form von Ballen 9 aufweisen bzw. aus Kombinationen von Dünen 8 und Ballen 9 gebildet sein.

Bei dem Förderzustand gemäß Fig. 1e) ist die Rohrleitung 1 vollständig mit einem fließbettartigen Gemisch aus Fördergas und Fördergutteilchen 3 gefüllt, wobei die Fluidisierung so groß ist, daß sich der erwünschte Transport ergibt.

In Abwandlung hierzu zeigt der Förderzustand gemäß Fig. 1f) den Zustand der injizierten Pfropfenförderung, bei dem im jeweiligen Rohrabschnitt 2 der Förderleitung 1 aus den Fördergutteilchen 3 einzelne Pfropfen 10 gebildet sind, zwischen denen sich entsprechende Blasen des Fördergases 4 befinden.

Wie bereits dargelegt, wird bei dem beschriebenen Verfahren aufgrund der angewendeten Bedingungen ein Förderzustand erzielt, der eine Förderung ähnlich einer Strähnen/Ballen-Förderung bis hin zu einer Pfropfenförderung bewirkt - entsprechend den Förderzuständen gemäß Fig. 1b) - 1f). Damit ist in jedem Fall gewährleistet, daß sich die am Rohrboden 6 aufbauende Fördergutschicht 7 ebenfalls fortbewegt, und zwar zusammen mit den durch den Fördergasstrom 4 im reinen Flug bewegten Fördergutteilchen 3. Somit sind bei dem beschriebenen Verfahren je nach den Eigenschaften des Förderguts, der gewünschten Förderleistung und der Länge des Förderwegs alle geschilderten Förderzustände gemäß Fig. 1b) 1f) möglich. Dabei werden ruhende Gutschichten vermieden, und es wird bei allen Förderzuständen der spezifische Druckwiderstand stark verringert oder es werden stattdessen größere Beladungen ermöglicht.

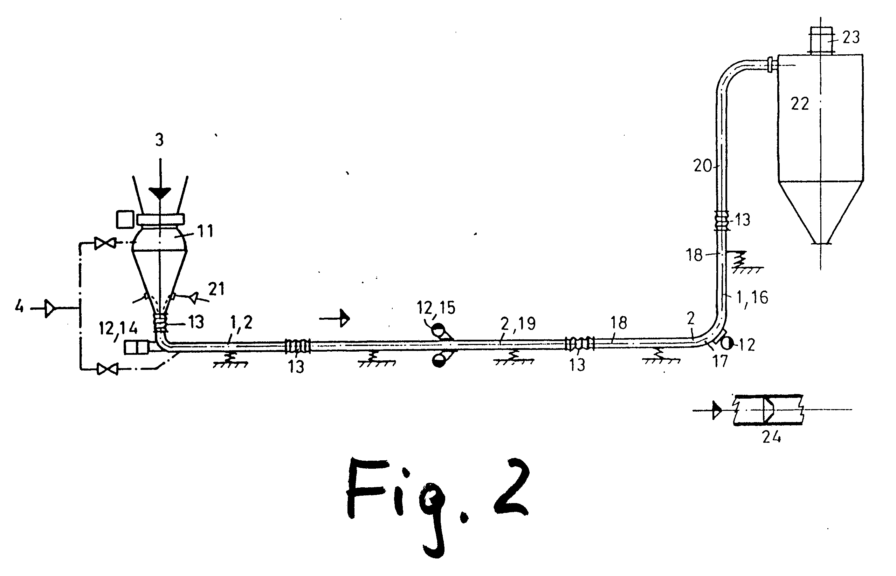

Fig. 2 zeigt schematisch den Aufbau einer Fördervorrichtung. Das Fördergut 3 gelangt in eine Aufgabeeinrichtung 11, in diesem Fall in einen Sender. Die Rohrleitung 1 ist in verschiedene schwingfähig gelagerte Rohrleitungsabschnitte 2 unterteilt. Diese sind durch Schwingungskompensatoren 13 voneinander getrennt und mit Schwingungserregern 12 versehen. Als solche kommen regelbare Elektromagnet-Vibratoren 14, Unwuchtmotoren 12 mit Kreisschwingung oder Unwuchtmotoren 15 mit gerichteter Schwingung in Frage. Ein schwingender Förderrohrabschnitt 2 kann entweder aus einem geraden Rohrstücke 19 bestehen oder aus einer Kombination 16 aus einem Bogen 17 mit zwei geraden Schenkeln 18. Ein Teil der Förderleitung 1 kann auch aus einem festen, nicht schwingenden Rohrstück 20 bestehen.

Zur Erhöhung der Rohrfüllung mit Fördergut 3 können flußhemmende Mundstücke 24 eingebaut sein oder es kann die Aufgabeeinrichtung 11 mit Fluidisiergas 21 beaufschlagt werden.

Der Fördergutstrom 3 kann ohne besondere Abscheidevorrichtungen direkt in den Empfangsbehälter 22 geführt werden. Die sehr geringe Fördergasmenge entweicht durch einen kleinen Filter 23.

Insgesamt wird daher das Fördergut 3 über einen Drucksender 11 oder eine Schleuse mit hoher Beladung in eine in Abschnitte 2 unterteilte Förderleitung 1 aufgegeben. Die einzelnen Abschnitte 2 dieser Leitung 1 bestehen aus schwingfähig gelagerten Rohrstücken, die mit geeigneten Schwingungserregern 12, 14, 15 in Vibration versetzt werden. Einzelne Abschnitte können auch aus festen Rohren 20 bestehen.

Durch die Vibration der Förderrohrwandung wird die Reibung zwischen der Fördergutluftsäule und der Rohrwand vermindert, wodurch bei einem bestimmten Förderdruck wesentlich höhere Beladungen möglich sind. Ebenso kann die Fördergeschwindigkeit ohne Verstopfungsgefahr stark reduziert werden.

Obwohl nicht näher dargestellt, ist es dennoch selbstverständlich möglich, wie bereits früher dargelegt, bei der Förderung extrem bruchempfindlicher grobkörniger Förderpartikel mit Partikelgrößen über 1 mm die Anordnung derart zu treffen, daß die vertikalen Teile der Förderleitung 1 schraubenartig um eine vertikale Achse sich windend angeordnet sind und daß diese sich nach oben windenden Teile der Förderleitung um ihre vertikale Mittelachse in drehende Schwingungen versetzt sind. Hierdurch wird auch bei der vertikal nach oben führenden Förderung extrem bruchempfindlicher grobkörniger Förderpartikel ein ähnlicher Förderzustand wie bei der Horizontalförderung erzielt.

Hinsichtlich vorstehend nicht ausdrücklich beschriebener weiterer Merkmale der Erfindung wird im übrigen auf die Zeichnung sowie auf die Patentansprüche verwiesen.

**Ansprüche**

1. Verfahren zum pneumatischen Fördern von Fördergut in Form von körnigen Feststoffen (3) oder dgl. durch Rohrleitungen (1), bei dem das Fördergut (3) von einer in Form eines Senders, einer Schleuse oder dgl. ausgebildeten Fördergutaufgabeeinrichtung (11) unter Druck sowie unter Zugabe von Fördergas (4) in die Rohrleitung (1) eingegeben wird,
**dadurch gekennzeichnet,**
- daß das Fördergut (3) in die in verschiedene schwingungsfähig gelagerte Förderleitungsabschnitte (2) unterteilte Rohrleitung (1) so eingegeben wird, daß der Rohrquerschnitt nicht vollständig, sondern lediglich teilweise ausgefüllt ist, und
- daß auf einzelne Förderleitungsabschnitte (2) von bis zu mehreren Metern Länge Schwingungen derart aufgebracht werden, daß die Wandreibung zwischen Fördergut (3) und Förderrohr (1) so reduziert wird, daß ein Förderzustand ähnlich einer Strähnen/Ballen-Förderung bis zu einer Pfropfenförderung mit hoher Gutbeladung des Fördergases (4) entsteht und sich die am Rohrboden (6) aufbauende Fördergutschicht (7) ebenfalls fortbewegt.

2. Verfahren nach Anspruch 1,
**dadurch gekennzeichnet,**
daß die Schwingungen auf die einzelnen Förderleitungsabschnitte (2) mit Beschleunigungen von wenigstens 1,2 g aufgebracht werden.

3. Verfahren nach Anspruch 1 oder 2,
**dadurch gekennzeichnet,**
daß die auf die einzelnen Förderleitungsabschnitte (2) aufgebrachten Schwingungen Frequenzen im Bereich von etwa 50 Hz aufweisen.

4. Verfahren nach einem der Ansprüche 1 bis 3,
**dadurch gekennzeichnet,**
daß die auf die einzelnen Förderleitungsabschnitte (2) aufgebrachten Schwingungen Amplituden im Bereich von Bruchteilen von Millimetern aufweisen.

5. Verfahren nach einem der Ansprüche 1 bis 4,
**dadurch gekennzeichnet,**
daß das Fördergas (4) im Förderrohr (1) eine Geschwindigkeit zwischen 0,5 und 3,0 m/s aufweist.

6. Verfahren nach einem der Ansprüche 1 bis 5,
**dadurch gekennzeichnet,**
daß die Fördermenge durch Ändern des Fördergasdruckes und/oder durch Ändern der Schwingungen am Anfang der Förderleitung (1) variiert bzw. dosiert wird.

7. Vorrichtung zur Durchführung des Verfahrens nach einem der Ansprüche 1 bis 6, mit einer in mehrere Förderleitungsabschnitte (2) unterteilten Rohrleitung (1), an deren Anfang eine Fördergutaufgabeeinrichtung (11) in Form eines Senders, einer Schleuse oder dgl. vorgesehen ist,
**dadurch gekennzeichnet,**
daß die einzelnen schwingungsfähig gelagerten Förderleitungsabschnitte (2) zur Vibrationserregung jeweils einen Schwingungserreger (12) aufweisen und durch Schwingungskompensatoren (13) voneinander getrennt sind.

8. Vorrichtung nach Anspruch 7,
**dadurch gekennzeichnet,**
daß der erste Rohrabschnitt (2) mit einem einstellbaren oder regelbaren Vibrationserreger (14) als Dosierorgan ausgestattet ist.

9. Vorrichtung nach Anspruch 7 oder 8,
**dadurch gekennzeichnet,**
daß einzelne oder alle Förderleitungsabschnitte (2) mit besonderen Mundstücken (24) bzw. den Widerstand erhöhenden Schikanen zur Erhöhung der Gutbeladung der Förderluft (4) versehen sind.

10. Vorrichtung nach einem der Ansprüche 7 bis 9,
**dadurch gekennzeichnet,**
daß die Schwingungserreger (12,14) zur Erzeugung der Vibration als elektromagnetische Schwingungserreger mit axial zur Rohrachse oder im Winkel von bis zu 45° gerichteter Schwingung ausgebildet sind.

11. Vorrichtung nach einem der Ansprüche 7 bis 9,

**dadurch gekennzeichnet,**

daß die Schwingungserreger Unwuchtmotoren (12) sind, welche eine Kreisschwingung erzeugen.

12. Vorrichtung nach einem der Ansprüche 7 bis 9,

**dadurch gekennzeichnet,**

daß als Schwingungserreger Doppelunwuchtmotoren (15) vorgesehen sind, die eine gerichtete Schwingung mit Schwingungsrichtung axial zur Rohrachse oder mit einem Neigungswinkel von bis zu 45° zur Rohrachse erzeugen.

13. Vorrichtung nach einem der Ansprüche 7 bis 12,

**dadurch gekennzeichnet,**

daß wenigstens ein Schwingungsabschnitt (16) der Förderleitung (1) aus einem Rohrbogen (17) mit festverbundenen geraden Schenkeln (18) besteht, der durch einen mittig angebrachten Vibrationserreger (12) in Schwingungen versetzbar ist.

14. Vorrichtung nach einem der Ansprüche 7 bis 12,

**dadurch gekennzeichnet,**

daß wenigstens ein schwingendes Teilstück der Förderleitung (1) aus einem geraden Rohrstück (19) besteht, das horizontal oder schräg geneigt oder vertikal angeordnet ist.

15. Vorrichtung nach einem der Ansprüche 7 bis 14,

**dadurch gekennzeichnet,**

daß einzelne, einen verminderten Druckwiderstand aufweisende Rohrabschnitte, z.B. senkrechte Rohrabschnitte, mit festen, nichtschwingenden Rohren (20) ausgestattet sind.

16. Vorrichtung nach einem der Ansprüche 7 bis 15,

**dadurch gekennzeichnet,**

daß durch taktweise erfolgende Zufuhr des Fördergases (4) der Förderzustand einer indizierten Pfropfenförderung erzielbar ist (Fig. 1f).

17. Vorrichtung nach einem der Ansprüche 7 bis 15,

**dadurch gekennzeichnet,**

daß bei sehr feinkörnigen Gütern mittels einer an oder nahe der Fördergutaufgabeeinrichtung (11) vorgesehenen Fluidisiereinrichtung (21) ein fließbettähnlicher Förderzustand erzielbar ist (Fig. 1e).

18. Vorrichtung nach einem der Ansprüche 7 bis 17,

**dadurch gekennzeichnet,**

daß, insbesondere zur Förderung grobkörniger Güter mit Partikelgrößen über 1 mm, die vertikalen Rohrabschnitte der Förderleitung (1) schraubenartig um eine vertikale Achse sich windend angeordnet und die aufwärts spiralig verlaufende Förderleitung um ihre vertikale Mittelachse in drehende Schwingungen versetzbar ist.

**Fig. 1**

a) REINER FLUG

b) STRÄHNEN

c) STRÄHNEN ÷ DÜNEN

d) DÜNEN ÷ BALLEN

e) REINER SCHUB FLIESSBETTZUSTAND

f) INDIZIERTE PFROPFENFÖRDERUNG

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.3) |
|---|---|---|---|
| D,A | DE-A-3 212 782  (WIRTH)<br>* Insgesamt *<br>--- | 1 | B 65 G   53/52 |
| A | PATENT ABSTRACTS OF JAPAN, Band 9, Nr. 51 (M-361)[1774], 6. März 1985; & JP-A-59 186 833 (MITSUI ZOSEN K.K.) 23-10-1984<br>--- | 1 | |
| A | DE-C-3 711 122  (MÖLLER)<br>* Insgesamt *<br>--- | 1 | |
| A | DE-B-1 012 562  (SPINNFASER AG)<br>* Insgesamt *<br>--- | 1 | |
| A | FR-A-2 101 214  (LINDER)<br>* Insgesamt *<br>--- | 1,10-12 | |
| A | DE-A-2 809 005  (RUHRHOHLE)<br>* Figur *<br>----- | 9 | |

**RECHERCHIERTE SACHGEBIETE (Int. Cl.3)**

B 65 G

Der vorliegende Recherchenbericht wurde für alle Patentansprüche erstellt

| Recherchenort | Abschlußdatum der Recherche | Prüfer |
|---|---|---|
| DEN HAAG | 01-06-1989 | OSTYN T.J.M. |